# EUROPÄISCHE PATENTSCHRIFT

(11) **EP 2 196 787 B1**
(45) Veröffentlichungstag und Bekanntmachung des Hinweises auf die Patenterteilung: **27.02.2013**
(21) Anmeldenummer: 09177890.2
(22) Anmeldetag: 03.12.2009
(51) Int. Cl.: G01K 1/12, G01K 13/02

(54) **Hochtemperatursensor**
High temperature sensor
Capteur haute température

(30) Priorität: 03.12.2008 DE 102008060123
(43) Veröffentlichungstag der Anmeldung: 16.06.2010
(73) Patentinhaber: Continental Automotive GmbH, 30165 Hannover (DE)
(72) Erfinder: Kovar, Antonin, 75655, Dolni Becva (CZ); Krsjak, Andrej, 02001, Puchov (SK); Slavik, Rostislav, 74221, Koprivnice (CZ); Yahia, Maymoon, 76824, Hulin (CZ)

(56) Entgegenhaltungen:
- DE-A1- 19 840 198
- JP-A- 2008 281 548
- US-A- 5 427 452

## Beschreibung

Die Erfindung betrifft einen Hochtemperatursensor mit einem Sensorelement, das in einem Schutzrohr gelagert ist.

Zur Messung hoher Temperaturen im Bereich von 1000 °C und mehr haben sich vor allem berührungslose Verfahren etabliert, die beispielsweise die spektrale Strahlungsdichte des Körpers, dessen Temperatur bestimmt werden soll, vermessen. Diese Verfahren eignen sich sehr gut zur Bestimmung von Temperaturen unter Laborbedingungen. Im großtechnischen Einsatz sind diese Verfahren in der Regel zu aufwendig, zu empfindlich und zu teuer.

Gerade in der Automobilindustrie, in der sehr große Stückzahlen von Sensoren benötigt werden, wären berührungslose Verfahren zur Temperaturmessung ungeeignet. Dem gegenüber steht ein großes Interesse, zum Beispiel die im Abgasstrang von Kraftfahrzeugen herrschende Temperatur preisgünstig und präzise zu bestimmen. Hierfür bieten sich Messvorrichtungen an, bei denen die Messelemente, zum Beispiel in Form einer Platinsonde, die ihren Widerstand in Abhängigkeit von der Temperatur ändert, in den Abgasstrang eingebracht werden. Bei diesen Vorrichtungen tritt jedoch das Problem auf, dass die Messsonde selber durch die hohe Temperatur im Abgasstrang thermisch soweit belastet wird, dass sich die Materialien, aus denen die Messsonde besteht, in ihren mechanischen Eigenschaft wesentlich verändern. Die Materialien, aus denen die Messvorrichtung gefertigt ist, werden durch die hohen Abgastemperaturen mechanisch instabil, wodurch sich zum Beispiel Vibrationen im Abgasstrang besonders ungünstig auf die Messvorrichtung auswirken.

Die JP 2008-281548 A offenbart einen Hochtemperatursensor mit einem Sensorelement, das in einem Schutzrohr gelagert ist, wobei das Schutzrohr von einem Versteifungsrohr umgeben ist, wobei das Versteifungsrohr in einem ersten Bereich des Schutzrohrs mit dem Schutzrohr fest verbunden ist.

Es ist die Aufgabe der vorliegenden Erfindung, einen Hochtemperatursensor anzugeben, der auch im Umfeld der hohen Temperaturen im Abgasstrang eines Kraftfahrzeuges zuverlässig und sicher die Abgastemperatur bestimmt. Dabei soll der Hochtemperatursensor langlebig und preiswert sein.

Die Aufgabe wird erfindungsgemäß durch die Merkmale des unabhängigen Anspruchs gelöst.

Dadurch, dass das Schutzrohr von einem Versteifungsrohr umgeben ist, wobei das Versteifungsrohr aus einem Material besteht, dessen Wärmedehnungskoeffizient höher ist als der des Materials aus dem das Schutzrohr besteht, wobei das Versteifungsrohr in einem ersten Bereich des Schutzrohrs mit dem Schutzrohr fest verbunden ist und in einem zweiten Bereich des Schutzrohrs ein Anschlagelement fest mit dem Schutzrohr verbunden ist, kommt das Versteifungsrohr aufgrund seiner höheren Wärmedehnung ab einer vorgegebenen Temperatur in mechanischen Kontakt mit dem Anschlagelement, wodurch der Hochtemperatursensor ab dieser Temperatur mechanisch stabilisiert wird. Diese mechanische Stabilisierung des Hochtemperatursensors ab einer vorbestimmten, hohen Temperatur verleiht dem Hochtemperatursensor genügend mechanische Steifigkeit, um den Vibrationen im Abgasstrang zu widerstehen und über eine lange Lebensdauer eine präzise Temperaturmessung zu ermöglichen.

Weitere Merkmale, Vorteile und Weiterbildungen ergeben sich aus dem nachfolgenden in Verbindung mit den Figuren 1 bis 3 erläuterten Beispiel. Es zeigen:
- Figur 1: einen langgestreckten Hochtemperatursensor,
- Figur 2: den langgestreckten Hochtemperatursensor in kaltem Zustand,
- Figur 3: den langgestreckten Hochtemperatursensor bei einer hohen Temperatur.

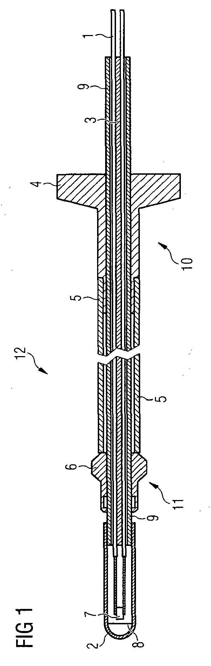

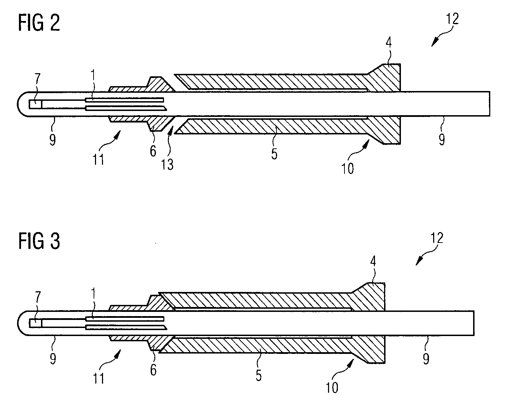

Fig. 1 zeigt einen langgestreckten Hochtemperatursensor 12. Der Hochtemperatursensor 12 besteht aus einem Schutzrohr 9, das einseitig mit der Schutzrohrkappe 2 verschlossen ist. In der Schutzrohrkappe 2 ist das Temperatursensorelement 7 zu erkennen. Dieses Temperatursensorelement 7 ist in der Regel ein Widerstandssensorelement, das mit zunehmender Temperatur seinen Widerstandswert entweder erhöht oder verringert. Diese Sensorelemente sind zum Beispiel unter den Namen NTC oder PTC bekannt. Der Raum zwischen dem Sensorelement 7 und der Schutzrohrkappe 2 ist mit einem gut Wärme leitenden Material 8 ausgefüllt. Dies kann zum Beispiel ein feines Siliziumpulver sein. Im Schutzrohr 9 sind die elektrischen Leitungen 1 zu erkennen, die eine elektrische Verbindung zwischen dem Sensorelement 7 und einer hier nicht dargestellten nachfolgenden Auswerteelektronik herstellen. Die elektrischen Leitungen 1 sind in einem Leitungsträger 3 gelagert, der in der Regel die elektrische Isolation zwischen den elektrischen Leitungen und dem metallischen Schutzrohr 9 herstellt. In einem ersten Bereich 10 ist das Schutzrohr 9 fest mit einem Teil des Versteifungsrohres 5 verbunden. Am Versteifungsrohr 5 ist der Befestigungssockel 4 für den Hochtemperatursensor 12 zu erkennen. Mit dem Befestigungssockel 4 kann der Hochtemperatursensor 12 im Abgasstrang befestigt werden. Darüber hinaus ist in einem zweiten Bereich 11 des Schutzrohres 9 ein Anschlagelement 6 zu erkennen. In diesem zweiten Bereich 11 ist das Anschlagelement 6 fest mit dem Schutzrohr 9 verbunden. Der Wärmedehnungskoeffizient des Schutzrohres 9 unterscheidet sich wesentliche von den Wärmedehnungskoeffizienten des Versteifungsrohres 5. Die Wirkungsweise des Hochtemperatursensors 12 wird in den Figuren 2 und 3 dargestellt.

Figur 2 zeigt den langgestreckten Hochtemperatursensor 12 in kaltem Zustand. Es ist wiederum das Schutzrohr 9 zu erkennen, in dem das Sensorelement 7 gelagert ist. Mit dem Schutzrohr 9 ist im ersten Bereich 10 des Schutzrohres das Versteifungsrohr 5 verbunden. Im zweiten Bereich 11 des Schutzrohres 9 ist das Anschlagelement 6 fest mit dem Schutzrohr 9 verbunden. Zwischen dem Anschlagelement 6 und dem Versteifungsrohr 5 ist deutlich ein Zwischenraum 13 zu erkennen. Im kalten Zustand ist die Steifigkeit des Schutzrohres 9 vollständig ausreichend, um den Hochtemperatursensor 12 im Abgasstrang zu tragen. Der Wärmedehnungskoeffizient des Versteifungsrohres 5 ist jedoch wesentlich höher als der Wärmedehnungskoeffizient des Schutzrohres 9. Erwärmt sich nun der Hochtemperatursensor 12 im Abgasstrang des Kraftfahrzeuges, so beginnt sich das Versteifungsrohr 5 schneller auszudehnen als das Schutzrohr 9. Mit zunehmender Temperatur wird der Hochtemperatursensor 12, dessen Schutzrohr 9 aus Metall gefertigt ist, mechanisch immer instabiler, was gerade im stark vibrierenden Abgasstrang eines Kraftfahrzeuges äußerst nachteilig ist. Dadurch, dass sich das Versteifungsrohr 5 schneller thermisch dehnt als das Schutzrohr, verringert sich der Zwischenraum 13 zwischen dem Versteifungsrohr 5 und dem Anschlagelement 6 immer weiter.

Ab einer bestimmten Temperatur im Abgasstrang, die von dem langgestreckten Hochtemperatursensor 12 gemessen wird, kommt die in Figur 3 dargestellte Situation zustande. Das Versteifungsrohr 5 hat sich soweit gedehnt, dass der Zwischenraum 13 zwischen dem Versteifungsrohr 5 und dem Anschlagelement 6 vollständig verschwunden ist. Bei dieser hohen Temperatur greift nun das Versteifungsrohr 5 unterstützend am Anschlagelement 6 an. Das durch die hohe Temperatur mechanisch labil gewordene Schutzrohr 9 wird nun vom Versteifungsrohr 5 und dem Anschlagelement 6 gestützt. Hierdurch ist der Hochtemperatursensor 12 auch bei sehr hohen Temperaturen im Abgasstrang mechanisch stabil, wodurch die Temperaturmessung weiterhin möglich ist und nicht durch Vibrationen oder andere mechanische Einflüsse gestört wird. Mit dem hier dargestellten Hochtemperatursensor 12 ist es möglich, auch mit relativ preisgünstigen elektronischen Temperatursensorelementen 7 unter den widrigen Bedingungen im Abgasstrang eines Kraftfahrzeuges hohe Temperaturen zu messen. Damit wird der erfindungsgemäße Hochtemperatursensor als kostengünstiges Bauteil im großtechnischen Einsatz im Kraftfahrzeug aus ökonomischer Sicht hoch attraktiv.

## Patentansprüche

1. Hochtemperatursensor (12) mit einem Sensorelement (7), das in einem Schutzrohr (9) gelagert ist das Schutzrohr (9) von einem Versteifungsrohr (5) umgeben ist, wobei das Versteifungsrohr (5) in einem ersten Bereich (10) des Schutzrohrs (9) mit dem Schutzrohr (9) fest verbunden ist,
dadurch h gekennzeichnet, dass das Versteifungsrohr (5) aus einem Material besteht, dessen Wärmedehnungskoeffizient höher ist als der des Materials aus dem das Schutzrohr (9) besteht und in einem zweiten Bereich (11) des Schutzrohrs (9) ein Anschlagelement (6) fest mit dem Schutzrohr (9) verbunden ist, wobei das Versteifungsrohr (5) aufgrund seiner höheren Wärmedehnung ab einer vorgegebenen Temperatur in mechanischen Kontakt mit dem Anschlagelement (6) kommt, wodurch der Hochtemperatursensor (12) ab dieser Temperatur mechanisch stabilisiert wird.

## Claims

1. High-temperature sensor (12) having a sensor element (7) which is mounted in a protective tube (9), the protective tube (9) is surrounded by a reinforcement tube (5), wherein the reinforcement tube (5) is fixedly connected to the protective tube (9) in a first region (10) of the protective tube (9), **characterized in that** the reinforcement tube (5) is composed of a material whose coefficient of thermal expansion is higher than that of the material from which the protective tube (9) is formed, and an abutment element (6) is fixedly connected to the protective tube (9) in a second region (11) of the protective tube (9), wherein the reinforcement tube (5), owing to its greater thermal expansion, comes into mechanical contact with the abutment element (6) above a predefined temperature, whereby the high-temperature sensor (12) is mechanically stabilized above said temperature.

## Revendications

1. Capteur (12) de haute température comprenant un élément (7) de capteur qui est monté dans un tube (9) de protection, le tube (9) de protection étant entouré d'un tube (5) de renfort, le tube (5) de renfort étant relié solidement au tube (9) de protection dans une première partie (10) du tube (9) de protection,
**caractérisé en ce que** le tube (5) de renfort est en un matériau dont le coefficient de dilatation thermique est plus grand que celui du matériau dont est constitué le tube (9) de protection et dans une deuxième partie (11) du tube (9) de protection un élément (6) de butée est relié rigidement au tube (9) de protection, le tube (5) de renfort venant en raison de sa dilatation thermique plus grande à partir d'une température prescrite en contact mécanique avec l'élément (6) de buée de sorte que le capteur (12) de haute température est stabilisé mécaniquement à partir de cette température.
